(19) Europäisches Patentamt
European Patent Office
Office européen des brevets

(11) Numéro de publication: **0 133 109**
**A1**

(12) # DEMANDE DE BREVET EUROPEEN

(21) Numéro de dépôt: **84401509.9**

(22) Date de dépôt: **18.07.84**

(51) Int. Cl.[4]: **H 01 B 1/12**
C 08 G 61/10, C 08 F 8/42

(30) Priorité: **21.07.83 FR 8312075**

(43) Date de publication de la demande:
**13.02.85 Bulletin 85/7**

(84) Etats contractants désignés:
**BE DE GB IT NL**

(71) Demandeur: **SOCIETE NATIONALE ELF AQUITAINE**
**Tour Aquitaine**
**F-92400 Courbevoie(FR)**

(72) Inventeur: **Francois, Bernard**
**21, Rue Schott**
**F-67000 Strasbourg(FR)**

(72) Inventeur: **Mathis, Claude**
**14, Résidence les Prairies Berstett**
**F-67370 Truchtersheim(FR)**

(74) Mandataire: **Boillot, Marc**
**SOCIETE NATIONALE ELF AQUITAINE Département Propriété Industrielle Tour Aquitaine - Cedex No 4**
**F-92080 Paris la Défense(FR)**

(54) **Procédé de dopage N des polymères.**

(57) Procédé de dopage N de film ou de poudre de polyacetylène ou de polyphenylène par un agent dopant choisi parmi les organolithiens ou les sels alcalins des carbanions ou dicarbanions de structure benzylique.

Les polymères dopés N ont des applications électrochimiques ou photovoltaïques.

EP 0 133 109 A1

Croydon Printing Company Ltd.

SOCIETE NATIONALE ELF AQUITAINE - DPI 4602

## PROCEDE DE DOPAGE N DES POLYMERES

L'invention concerne un nouveau procédé de dopage du polyacetylène ou polyphenylène permettant d'obtenir un polymère dopé N utilisable pour des applications électrochimiques ou photovoltaïques.

Le dopage des polymères en vue de l'obtention d'un corps semiconducteur est connu. Pour le dopage on utilise soit des composés qui confèrent une charge positive (dopage P) soit des composés qui confèrent une charge négative (dopage N) aux polymères.

De nombreux brevets et publications décrivent le dopage P des polymères par les composés accepteurs d'électrons, comme l'iode ou le pentafluorure d'arsenic (Brevet japonais n° 81 145 929 déposé par Showa Denko) les acides forts (brevet japonais n° 80 129 425 de Showa Denko) ou des sels de titane (brevet américain 4 349 664 de Japan Synthetic Rubber Co).

Le dopage N est beaucoup moins étudié. Quelques publications concernent le dopage N par voie électrochimique ou par addition de composés donneurs d'électrons. Comme donneurs d'électrons ont été utilisés les métaux alcalins, seuls, en mélange ou en amalgame et les sels alcalins d'ions radicaux (Brevet Européen 54683 de BASF).

Le dopage par des métaux alcalins met en jeu des réactions métal/solide difficiles à maitriser.

La synthèse des ions radicaux comme le naphtalène sodium ou les complexes alcalins de cétones aromatiques nécessite la présence d'un solvant polaire. Si le métal utilisé est le sodium ou le lithium, ce solvant se coinserre dans le polymère et exerce un effet néfaste sur la conductivité de ce dernier. La coinsertion du solvant augmente également considérablement le poids des polymères ce qui va à l'encontre du but recherché en les utilisant.

L'invention prévoit un procédé de dopage du polyacétylène et du polyphenylène simple et efficace et qui permet d'obtenir de bonnes conductivités aussi bien en solvant polaire qu'en solvant non-polaire.

Pour cela elle concerne un procédé d'obtention de polyacetylène ou de polyphenylène dopé N par mise en contact du polymère considéré avec un agent dopant dans un solvant de ce dernier caractérisé en ce que l'agent dopant est choisi dans le groupe renfermant les composés de formule

a,

$$R_1 - Li \qquad (I)$$

ou $R_1$, est un radical hydrocarboné saturé ou non pouvant être une chaîne polymérique

b,

$$Ar - \underset{R_2}{\overset{R_3}{\underset{|}{\overset{|}{C}}}} \ominus M \oplus \qquad (II)$$

ou Ar est le radical phenyl,2- ou 4-pyridyl $R_2$ et $R_3$ identiques ou différents représentent l'hydrogène ou un radical hydrocarboné saturé ou non, pouvant être une chaîne polymérique.

M représente un atome de métal alcalin choisi parmi le Na, K, Li, Cs et Rb

c, $$M^{\oplus}\ \ominus\ \overset{R_4}{\underset{Ar}{C}} - (R_6) - \overset{R_5}{\underset{Ar}{C}}\ \ominus\ M^{\oplus} \qquad (III)$$

ou Ar et M ont les significations précitées, $R_4$ et $R_5$ représentent l'hydrogène ou un radical hydrocarboné saturé ou non $R_6$ représente un radical hydrocarboné divalent saturé ou non pouvant être une chaine polymérique.

Les composés organolithiens de formule (I) peuvent être utilisés seuls ou en présence d'agents complexants tels que la N, N, N', N' - tetramethylène diamine (TMEDA) ou des ethers couronnes. Le dopage peut être effectué en présence de solvants aprotiques non-polaires comme l'hexane ou le benzène. Il est également possible d'utiliser les solvants polaires comme le tetrahydrofuranne, bien que la stabilité de ces organolithiens ne soit pas très bonne en milieu polaire.

Parmi les organolithiens de formule (I) on utilise de préférence les alkyl et aryl lithiens notamment les butyllithium primaire, secondaire ou tertiaire ou le phényllithium. Le butyllithium secondaire et son complexe avec la TMEDA sont particulièrement avantageux. Le butyllithium normal permet un dopage progressif et homogène aux faibles taux de dopage. Les sels carbanioniques ou dicarbanioniques de formule générale (II) ou (III) peuvent être utilisés en présence de solvants non-polaires, si le métal est le lithium et avec des solvants polaires, si le sel est formé avec les autres métaux alcalins.

Parmi les sels carbanioniques de formule (II) on préfère les composés ou Ar est le radical phényl et $R_2$ et $R_3$ représentent l'hydrogène, un radical alkyl contenant de 1 à 6 atomes de carbone ou un radical phényl. On peut citer le benzyllithium, le diphényl-1,1-hexyllithium, le diphenyl-1,1-diméthyl-3,3-butyllithium, le diphényl-1,1-méthyl-3-pentyllithium, le phenyl-1-méthyl-1-ethylpotassium ou le phényl-1-éthyl potassium.$R_2$ et $R_3$ peuvent également représenter une chaine de polystyrène ou de poly-α-methyl-styrène.

Parmi les composés dicarbanioniques de formule (III) on peut citer les oligomères et "polymères vivants" du styrène ou de l'α-methylstyrène ainsi que le dimère du diphenyl-1,1-ethylène (tetraphenyl-1,1,4,4-butylène) associés au lithium, le sodium ou le potassium.

Le procédé selon l'invention permet le dopage de polymères comme le polyacétylène ou le polyphenylène sous forme de film ou de poudre.

La température du dopage peut varier entre -80°C et + 150°C et de préférence entre 0 et 100°C. L'augmentation de la température accélère le dopage. Le temps de dopage varie très largement, par exemple entre 1 minute à 1 semaine. Souvent un temps de dopage de l'ordre de 10 minutes à 1 heure est suffisant.

L'invention et ses principales caractéristiques seront mieux comprises à la lecture des exemples suivants qui sont donnés à titre d'illustration.

EXEMPLES

Nous avons étudié le dopage des films de polyacetylène par divers agents de dopage.

Le polyacetylène est obtenu directement sous forme de film en présence d'un catalyseur Ziegler-Natta classique (triethylaluminium - tetrabutylate de titane) en utilisant la méthode SHIRAKAWA (J. of Polym. Sci. 12 11 (1974)).
Des échantillons de 3 x 1 x 0,02 cm environ découpés dans ce film sont installés entre les machoirs de cuivre reliées à des sorties étanches d'un appareil en verre comportant un tube de dopant fermé par un joint fragile. L'appareil est ensuite scellé sous vide et le tube de dopant est ouvert au moyen d'un aimant précedemment introduit dans l'appareil et entraîné par un aimant extérieur. On mesure la conductivité en fonction du temps de dopage. Pour tenir compte du caractère très poreux des films de polyacetylène et de la variation de leur densité apparente en fonction du procédé de préparation, on calcule d'abord une conductivité brute ($C_B$) rapportée à la dimension réelle, puis une conductivité normalisée ($C_N$) qui correspond à la conductivité du même film compacté, et qui est donnée par la formule :

$$C_N = \frac{C_B \times 1,16}{d}$$

ou d correspond à la densité apparente du film non-dopé 1,16 est la densité du polyacetylène en masse.
On a représenté dans le tableau (1) les résultats obtenus avec des composés organolithiens de formule (I) en présence de solvants aprotiques et apolaires. Tous les composés étudiés permettent de forts taux de dopage dans ce milieu. Le butyl lithium secondaire est beaucoup plus réactif que l'isomère normal. La vitesse de la réaction est encore augmentée par l'addition d'un complexant, le N, N, N', N' - tétramethylène-diamine (TMEDA) et par l'élévation de la température.

Tableau 1

| Dopant | n-Bu Li | | n-Bu Li/TMEDA | | sec-Bu Li | | sec-Bu Li | | sec-Bu Li | | sec-Bu Li/TMEDA | |
|---|---|---|---|---|---|---|---|---|---|---|---|---|
| Concentration mol/l | 1,55 | | 1,2 | | 1,0 | | 1,4 | | 1,4 | | solution saturée | |
| Solvant | Hexane | | Hexane | | Benzène | | Cyclohexane | | Cyclohexane | | Cyclohexane | |
| Température | 20°C | | 20°C | | 20°C | | 20°C | | 80°C | | 20°C | |
| | t | C.N. | t | C.N. | t | C.N. | t | C.N. | t | C.N. | t | C.N. |
| | 10 mn | $4,4.10^{-8}$ | 10 mn | $5,3.10^{-4}$ | 10 mn | $6,3.10^{-2}$ | 10 mn | $4,6.10^{-2}$ | 2 mn | 1,6 | 1 mn | $4.10^{-2}$ |
| | 1 j. | $1,5.10^{-3}$ | 1 h. | $5,4.10^{-3}$ | 1 h. | 4,3 | 1 h. | 4,0 | 5 mn | 11,0 | 5 mn | 0,35 |
| | 2 j. | $4,4.10^{-2}$ | 10 h. | 0,46 | 5 h. | 61 | 5 h. | 44,2 | 10 mn | 28,5 | 10 mn | 1,0 |
| | 6 j. | 1,5 | 20 h. | 2,4 | 10 h. | 89 | 10 h. | 77,0 | 1 h. | 99 | 1 h. | 14,5 |
| | 50 j. | 26 | 2 j. | 18,6 | 30 h. | 116 | 30 h. | 123 | | | 5 h. | 70 |
| | | | 6 j. | 49 | | | 4 j. | 144 | | | 10 h. | 78,6 |
| | | | | | | | | | | | 1 j. | 87,7 |
| Taux de dopage* Y | 50 j. | Y=0,15 | | | 30h. | Y=0,20 | 4 j. | Y=0,19 | | | 1 j. | Y=0,23 |

* obtenu par dosage chimique des constituants et exprimé en atome grammes de métal par C et H $Y = \frac{[M]}{[CH]}$

C.N. : Conductivité normalisée en $ohm^{-1}.cm^{-1}$.

On a représenté dans le tableau (2) les résultats obtenus par des sels carbanioniques et dicarbanioniques.

Le diphenylhexyllithium donne des résultats comparables dans un solvant apolaire le cyclohexane et dans un solvant peu polaire comme le diethylether. Par contre le dimère dicarbanionique du diphenyl-1,1-ethylène associé au lithium, utilisé dans le tetrahydrofuranne confère une conductivité très faible au polyacetylène à cause de la coinsertion du solvant. Aprè séchage de 24h, sous vide poussé la conductivité est multipliée par 20.

Tableau 2

| Dopant | Diphénylhexyl-Li | | Diphénylhexyl-Li | | Diphénylhexyl-Li | | $DD^{=}(Li^{+})_2$ (1) | |
|---|---|---|---|---|---|---|---|---|
| Concentration mol/l | solution saturée | | solution saturée | | $5.10^{-1}$ | | $2.10^{-1}$ | |
| Solvant | Cyclohexane | | Cyclohexane | | Diéthyléther | | THF | |
| Température | 20°C | | 70°C | | 20°C | | 20°C | |
| | t | C.N. | t | C.N. | t | C.N. | t | C.N. |
| | 1 mn | 0,56 | 1 mn | 17,5 | 1 mn | 0,32 | 5mn | 5,6 |
| | 5 mn | 3,6 | 5 mn | 73,5 | 10 mn | 3,5 | 10mn | 9,2 |
| | 30 mn | 25,7 | 10 mn | 100 | 30 mn | 32 | 30mn | 16 |
| | 1 h. | 52,7 | 1 h. | 148 | 1 h. | 73,3 | 1h | 18 |
| | 10 h. | 129 | | | 10 h. | 173 | 2h. | 20 (2) |
| | 2 j. | 167 | | | | | | |
| Taux de dopage Y | 2 j. | Y=0,24 | 1 h. | - | 10 h. | Y=0,20 | 2 h. | Y=0,15 |

(1) $DD^{=}(Li^{+})_2$ dimère dicarbanionique du 1,1-diphényléthylène associé au lithium

(2) Après séchage sous vide poussé pendant 24 heures la conductivité normalisée atteint 420 $ohm^{-1}$ $cm^{-1}$.

C.N. : Conductivité normalisée en $ohm^{-1}$ $cm^{-1}$

Le tableau (3) représente les résultats obtenus avec des sels mono et dicarbanioniques de sodium et de potassium dans un solvant polaire, le tetrahydrofuranne. Les sels sodiques sont très sensibles à la présence du solvant.

La conductivité augmente très sensiblement après séchage sous vide. Par contre les sels carbanioniques de potassium donnent des conductivités élevées même en présence de solvant.

Tableau 3

| Dopant | $DD=(Na^+)_2$ | | $DD=(K^+)_2$ | | $DD=(K^+)_2$ | | $DD=(K^+)_2$ | | $(\alpha MeS)^{=}_{2-4}(K^+)_2$ | | Phényl-1 éthyl-K | |
|---|---|---|---|---|---|---|---|---|---|---|---|---|
| Concentration mol/l | $2.10^{-1}$ | | $1.10^{-2}$ | | $5.10^{-2}$ | | $2.10^{-1}$ | | $1.10^{-1}$ | | $1.10^{-2}$ | |
| Solvant | THF | | THF | | THF | | THF | | THF | | THF | |
| Température | 20°C | | 20°C | | 20°C | | 20°C | | 20°C | | 20°C | |
| | t | C.N. | t | C.N. | t | C.N. | t | C.N. | t | C.N. | t | C.N. |
| | 1 mn | 1,0 | 30 mn | 0,53 | 1 mn | 0,29 | 1 mn | 0,93 | 1 mn | 0,73 | 5 mn | 0,056 |
| | 5 mn | 2,5 | 1 h. | 2,32 | 5 mn | 3,08 | 5 mn | 5,3 | 5 mn | 6,14 | 30 mn | 1,28 |
| | 30 mn | 8,7 | 5 h. | 28,4 | 10 mn | 7,6 | 10 mn | 11,7 | 10 mn | 13,0 | 1 h. | 3,85 |
| | 1 h. | 13,8 | 10 h. | 75,4 | 30 mn | 33,5 | 30 mn | 40,6 | 30 mn | 41,5 | 5 h. | 47 |
| | 1 j. | 55,7 (1) | 20 h. | 170 | 1 h. | 71,5 | 1 h. | 84 | 1 h. | 85,3 | 10 h. | 88 |
| | | | 2 j. | 312 | 5 h. | 290 | | | 5 h. | 210 | 1 j. | 157 |
| | | | 5 j. | 460 | 10 h. | 350 | | | 1 j. | 263 | 5 j. | 240 |
| | | | | | 2 j. | 439 | | | | | | |
| | | | | | 4 j. | 503 | | | | | | |
| Taux de dopage Y | 1 j. | Y=0,16 | 5 j. | Y=0,18 | 4 j. | Y=0,20 | | | 1 j. | Y=0,20 | 5 j. | Y=0,15 |

C.N : Conductivité normalisée en $ohm^{-1}\ cm^{-1}$

DD= : dimère dicarbonionique du 1,1-diphényléthylène

αMeS : α méthylstyrène.

(1) : Après séchage sous vide poussé pendant 1 heure la conductivité normalisée atteint 160 $ohm^{-1}\ cm^{-1}$.

## REVENDICATIONS

1 - Procédé d'obtention de polyacetylène ou de polyphenylène dopé N par mise en contact du polymère considéré avec un agent dopant dans un solvant de ce dernier caractérisé en ce que l'agent dopant est choisi dans le groupe renfermant les composés de formule

a,

$$R_1 - Li \qquad (I)$$

ou $R_1$ est un radical hydrocarboné saturé ou non, pouvant être une chaine polymérique

b,

$$A_r - \overset{R_3}{\underset{R_2}{C}}{}^{\ominus}\ M^{\oplus} \qquad (II)$$

ou Ar est le radical phenyl,2-pyridyl ou 4-pyridyl $R_2$ et $R_3$ identiques ou différents représentent l'hydrogène ou un radical hydrocarboné saturé ou non pouvant être une chaîne polymérique et M représente un atome de métal alcalin choisi parmi Na, Ki, Li, Cs et Rb

c,

$$M^{\oplus}\ {}^{\ominus}\overset{R_4}{\underset{Ar}{C}} - (R_6) - \overset{R_5}{\underset{Ar}{C}}{}^{\ominus}\ M^{\oplus} \qquad (III)$$

ou Ar et M ont les significations précitées, $R_4$ et $R_5$ représentent l'hydrogène ou un radical hydrocarboné saturé ou non, $R_6$ représente un radical hydrocarboné divalent saturé ou non, pouvant être une chaine polymérique.

2 - Procédé selon la revendication 1 caractérisé en ce que l'agent dopant est un composé de formule (I) ou $R_1$ est un groupe alkyl de 1 à 12 atomes de carbone ou le groupement phenyl.

3 - Procédé selon la revendication 2 caractérisé en ce que l'agent dopant est le butyllithium primaire, secondaire ou tertiaire.

4 - Procédé selon la revendication 2 ou 3 caractérisé en ce que l'agent dopant est associé à un agent complexant tel que le tetramethylènediamine.

5 - Procédé selon la revendication 4 caractérisé en ce que l'agent dopant est un butyllithium associé à un agent complexant tel que la tetramethylènediamine.

6 - Procédé selon la revendication 1 caractérisé en ce que l'agent dopant est un composé de formule (II) ou Ar est un radical phenyl et $R_1$ et $R_2$ représentent l'hydrogène, un radical alkyl contenant de 1 à 6 atomes de carbone ou un radical phényl.

7 - Procédé selon la revendication 6 caractérisé en ce que l'agent dopant est choisi parmi le benzyllithium, le diphenyl-1,1-hexyllithium, le diphenyl-1,1-dimethyl-3,3-butyllithium, le diphenyl-1,1-methyl-3-pentyllithium et le polystyryllithium.

8 - Procédé selon la revendication 6 caractérisé en ce que l'agent dopant est choisi parmi le phenyl-1-éthyl potassium ou cesium, le phenyl-1-methyl-1-ethyl potassium ou cesium ou un polystyryl potassium ou cesium.

9 - Procédé selon la revendication 1 caractérisé en ce que l'agent dopant est un oligomère ou polymère $\alpha,\omega$-dicarbanioniques du styrène ou de l'$\alpha$-methylstyrène ou un dimère dicarbanionique du diphenyl-1,1-éthylène.

10 - Procédé selon la revendication 3 ou 7 caractérisé en ce qu'on utilise un solvant non-polaire, comme l'hexane, le cyclohexane ou le benzène.

11 - Procédé selon la revendication 1 caractérisé en ce qu'on utilise un solvant polaire, notamment le tetrahydrofuranne.

12 - Procédé selon les revendications 6, 7, 8, 9 caractérisé en ce qu'on utilise un solvant polaire notamment le tetrahydrofuranne.

13 - Procédé selon l'une des revendications 1 à 12 caractérisé en ce que le dopage s'effectue à une température comprise entre - 80°C et + 150°C et de préférence entre 0 et 100°C.

14 - Procédé selon l'une des revendications 1 à 13 caractérisé en ce que le dopage s'effectue pendant une durée comprise entre 1 minute à 1 semaine et de préférence entre 10 minutes et 1 heure.

Office européen des brevets

# RAPPORT DE RECHERCHE EUROPEENNE

0133109 Numéro de la demande

EP 84 40 1509

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. 3) |
|---|---|---|---|
| A | DE-A-1 966 207 (FIRESTONE)<br>* revendication 1 *<br>--- | 1 | H 01 B 1/12<br>C 08 G 61/10<br>C 08 F 8/42 |
| A | EP-A-0 045 852 (BASF)<br>* revendication 1 *<br>--- | 1 | |
| A | FR-A-1 525 462 (SUN OIL)<br>* résumé, point 1 *<br>--- | 1 | |
| A | GB-A-1 215 306 (NAT. DISTILLERS)<br>* revendication 1 *<br>----- | 1 | |
| | | | DOMAINES TECHNIQUES RECHERCHES (Int. Cl. 3) |
| | | | H 01 B<br>C 08 G<br>C 08 F |

Le présent rapport de recherche a été établi pour toutes les revendications

| Lieu de la recherche | Date d'achèvement de la recherche | Examinateur |
|---|---|---|
| LA HAYE | 03-10-1984 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82